# EUROPEAN PATENT APPLICATION

(11) **EP 4 362 174 A1**
(43) Date of publication of application: **01.05.2024**
(21) Application number: 22203876.2
(22) Date of filing: 26.10.2022
(51) Int. Cl.: H01M 50/103, H01M 50/136, H01M 50/143, H01M 50/209, H01M 50/264, H01M 10/613, H01M 10/625

(54) **A BATTERY CELL MODULE ARRANGEMENT FOR AN ELECTRIC BATTERY PACK**

(71) Applicant: VOLVO TRUCK CORPORATION, 405 08 Göteborg (SE)
(72) Inventor: ARENSSON, Simon, 475 32 Öckerö (SE); SALOMONSSON, Mattias, 442 71 Kärnan (SE)
(74) Representative: Valea AB

(57) **Abstract**

The disclosure relates to a battery cell module arrangement (1) for an electric battery pack (100) comprising a housing (110) for storing a plurality of battery cell modules (10), the battery cell module arrangement (1) comprising:
- a first battery cell module (10) which is configured to hold and enclose at least one battery cell (20), and comprises a first outer side section (12) and a second outer side section (14) which are angled relative each other and divided by a first outer edge (16), the battery cell module arrangement (1) further comprising:
- a protective element (30) for protecting the first battery cell module (10) from contact with another element, such as another battery cell module and/or the housing (110) of the electric battery pack (100), wherein the protective element (30) is configured to enclose a portion of the first outer edge (16).

## Description

### TECHNICAL FIELD

The disclosure relates generally to electric batteries for vehicles. In particular aspects, the disclosure relates to a battery cell module arrangement for an electric battery pack, an electric battery pack and a vehicle. The disclosure can be applied in heavy-duty vehicles, such as trucks, buses, and construction equipment. Although the disclosure may be described with respect to a particular vehicle, the disclosure is not restricted to any particular vehicle.

### BACKGROUND

An electric battery, typically a high voltage electric battery, may be used as an energy source for powering one or more electric traction motors of a vehicle. The vehicle may for example be a pure electric vehicle comprising one or more electric traction motors or a hybrid vehicle comprising one or more electric traction motors and an internal combustion engine.

The electric battery, also known as an electric energy storage system (EESS) or an electric battery pack, may comprise a housing for storing a plurality of battery cell modules. Each battery cell module is configured to hold and enclose one or more battery cells, such as lithium-ion electrochemical cells or any other type of electrochemical cells. For example, the battery cell module may be configured as a box with walls in which the one or more battery cells are enclosed. The battery cells are electrically connected so that a high voltage electric battery is obtained. By high voltage is herein meant a voltage level of at least 60 volts (v), such as at least 200 v, 300 v, 400 v, 500 v or 600 v, for example 400 v or 800 v.

For the electric battery pack to function properly during use it may be important that the electric battery pack and its different components are not damaged before the electric battery pack is installed into the vehicle and/or during use in the vehicle.

In view of the above, there is a strive to develop improved electric battery packs and components thereof which at least take the above concerns into account.

### SUMMARY

According to a first aspect of the disclosure, there is provided a battery cell module arrangement for an electric battery pack comprising a housing for storing a plurality of battery cell modules, the battery cell module arrangement comprising:
- a first battery cell module which extends in a longitudinal direction, a width direction and a height direction, wherein the first battery cell module:
   - is configured to hold and enclose at least one battery cell, and
   - comprises a first outer side section and a second outer side section which are angled relative each other and divided by a first outer edge, wherein the first outer edge substantially extends in one of the longitudinal direction, the width direction and the height direction, and wherein the first outer side section comprises a first outer wall segment which at least partly defines the first outer edge,
the battery cell module arrangement further comprising:
- a protective element for protecting the first battery cell module from contact with another element, such as another battery cell module and/or the housing of the electric battery pack, wherein the protective element:
   - is configured to enclose a portion of the first outer edge, and
   - comprises an attachment arrangement for attaching the protective element to the first battery cell module, the attachment arrangement comprising a first protruding member and a second protruding member which are offset from each other so that a first recess is formed therebetween, and wherein the first and second protruding members are configured so that the first outer wall segment can be received in the first recess, thereby attaching the protective element to the first battery cell module.

The first aspect of the disclosure may seek to reduce a risk of damaging battery cell modules of the electric battery pack during installation of the battery cell modules into the housing of the electric battery pack. The first aspect of the disclosure may additionally or alternatively seek to reduce a risk of damaging battery cell modules of the electric battery pack during use of the electric battery pack in a vehicle, and/or during disassembly of the electric battery pack. A technical benefit may include that an outer side section of a battery cell module and/or the housing is/are prevented from being damaged when the first battery cell module, or any adjacent battery cell module to the first battery cell module, is inserted into or removed out from the housing of the electric battery pack. A technical benefit may also include that a defined safety gap between adjacent battery cell modules in the electric battery pack is obtained. The first aspect of the disclosure may additionally or alternatively seek to improve a connection interface between the protective element and the first battery cell module. For example, by the configuration of the attachment arrangement of the protective element, a reliable and robust attachment to the first battery cell module may be obtained.

Optionally, the protective element is a separate protective element. By a separate protective element is herein meant that the protective element may be releasably attached to the first battery cell module. By use of a separate protective element, a modular configuration may be obtained. This implies a more versatile configuration which can be adapted to different requirements.

Optionally, at least one of the first and second protruding members is elastically flexible so that a biasing force is generated between the respective first and second protruding member and the first outer wall segment when the first outer wall segment is received in the first recess. Thereby, the biasing force may provide a firmer attachment to the first outer wall segment. This may imply a more reliable and robust attachment of the protective element to the first battery cell module, reducing e.g. the risk that the protective element is released from the first battery cell module.

Optionally, the protective element further comprises a third protruding member and a fourth protruding member which are offset from each other so that a second recess is formed therebetween, wherein the third and fourth protruding members are configured to protrude away from the first outer edge and outside the second outer side section when the protective element is attached to the first battery cell module. Thereby, the second recess can be used for holding another element. This implies a more versatile configuration which for example may reduce heat transfer between adjacent battery cell modules when another element is provided in the second recess. An opening direction of an opening of the second recess may face away from the first outer edge and towards a second outer edge which is provided on an opposite side to the first outer edge on the second outer side section.

Optionally, the battery cell module arrangement further comprises a first protection layer element, such as a thermal and/or fire protection layer element, which is configured to be received in the second recess, thereby attaching the first protection layer element to the protective element, wherein the first protection layer element is configured to cover at least a portion of the second outer side section. Thereby, the risk of unwanted contact between another element and the second outer side section of the first battery cell module may be reduced. A technical benefit may also include that heat transfer between adjacent battery cell modules is reduced. A yet further technical benefit may include that flames caused by a damaged battery cell are prevented from being transferred between adjacent battery cell modules. Hence, a more reliable and robust electric battery pack may be obtained.

Optionally, the battery cell module arrangement is configured so that a gap is formed between the second outer side section and the first protection layer element when the protection layer element is received in the second recess. Thereby, heat transfer between adjacent battery cell modules may be further reduced. As another example, the gap may be used to reduce the risk that flames caused by a damaged battery cell are transferred to an adjacent battery cell module.

Optionally, the third protruding member is configured to be provided closer to the second outer side section than the fourth protruding member when the protective element is attached to the first battery cell module, and wherein the third protruding member protrudes further outside the second outer side section than the fourth protruding member. Thereby, an improved support for an element which is provided in the second recess may be obtained. This also implies that it may be easier to fit an element into the recess since the fourth protruding member is shorter than the third protruding member.

Optionally, the protective element is configured to extend along at least 10 % of a length of the first outer edge, such as at least 20 %, 30 %, 40 %, 50 %, 60 %, 70 %, 80 % or more of the length of the first outer edge. A protective element which covers a substantial portion of the length of the first outer edge implies an improved protection, reducing the risk of damage between adjacent battery cell modules and/or between the first battery cell module and the housing. A protective element which covers a smaller portion of the length of the first outer edge, such as 40 % of the length or less, may for example provide a more cost-effective configuration.

Optionally, the protective element, as seen in a sectional plane which is perpendicular to a longitudinal extension of the first recess, which longitudinal extension corresponds to an extension of the first outer edge when the protective element is attached to the first battery cell module, comprises a first protective portion which is configured to protrude away from the second outer side section in a normal direction thereof when the protective element is attached to the first battery cell module. The first protective portion may also protrude away from the first and second protruding members, e.g. in an opposite direction. Thereby, improved protection may be achieved, reducing the risk of any contact between adjacent battery cell modules and/or any contact between the first battery cell module and the housing.

Optionally, the first protective portion is elastically flexible in a direction which corresponds to the normal direction of the second outer side section, as seen when the protective element is attached to the first battery cell module. By way of example, an elastically flexible first protective portion may facilitate assembly/disassembly of the electric battery pack, e.g. when inserting/removing the battery cell module arrangement into/from the housing. As another example, it may reduce the risk of an adjacent battery cell module getting stuck when inserting the adjacent battery cell module into the housing. As yet another example, it may reduce the risk of an adjacent battery cell module getting stuck when removing the adjacent battery cell module from the housing.

Optionally, the first protective portion, as seen in the sectional plane which is perpendicular to the longitudinal extension of the first recess, is V-formed, C-formed and/or Z-formed. By said configurations, improved elastic flexibility may be obtained. Said configurations may also be advantageous from a manufacturing perspective, e.g. if the protective element is an extruded profile.

Optionally, the second outer side section comprises a second protection layer element, such as a second thermal and/or fire protection layer element. Thereby, further improved protection of the battery cells may be obtained. For example, in the case when the battery cell module arrangement comprises the first protective layer element and the second protective layer element, protection redundancy, such as thermal and/or fire protection redundancy, may be obtained. This implies increased safety, reduced risk of damages, etc.

Optionally, the first battery cell module comprises a third outer side section which is provided on an opposing side of the first battery cell module with respect to the second side section, wherein the third outer side section comprises a cooling plate element for cooling the first battery cell module during use. Still optionally, the first battery cell module comprises a fourth outer side section which is provided on any other side of the first battery cell module, wherein the fourth outer side section comprises a cooling plate element for cooling the first battery cell module during use. Still optionally, any outer side section of the first battery cell module may comprise a cooling plate element for cooling the first battery cell module during use. Thereby, improved cooling of the battery cell(s) may be obtained, implying improved battery performance and/or increased service life.

Optionally, the protective element is an extruded profile with an extrusion direction which corresponds to a longitudinal extension of the first recess, which longitudinal extension corresponds to an extension of the first outer edge when the protective element is attached to the first battery cell module. Thereby, a cost-effective protective element may be obtained. Still optionally, the protective element is a casted profile. A casted profile may imply increased design freedom, e.g. allowing more complex shapes to be formed.

According to a second aspect of the disclosure, there is provided an electric battery pack comprising a housing for storing a plurality of battery cell modules, wherein the electric battery pack comprises at least one battery cell module arrangement according to any one of the embodiments of the first aspect of the disclosure.

Advantages and effects of the second aspect of the disclosure are analogous to the advantages and effects of the first aspect of the disclosure.

According to a third aspect of the disclosure, there is provided vehicle comprising an electric battery pack according to any one of the embodiments of the second aspect of the disclosure.

Advantages and effects of the third aspect of the disclosure are analogous to the advantages and effects of the first and second aspects of the disclosure.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
Fig. 1 is a side view of a vehicle according to an example of the disclosure.
Fig. 2 is a perspective view of a battery cell module arrangement according to an example of the disclosure.
Fig. 3 is a perspective view of a portion of a battery cell module arrangement according to an example of the disclosure.
Fig. 4 is a perspective view of an electric battery pack according to an example of the disclosure.
Figs. 5a-l are perspective views of protective elements according to examples of the present disclosure.
Fig. 6 is a schematic view of a battery cell module arrangement according to an example of the present disclosure.
Fig. 7 is a schematic view of a battery cell module arrangement according to an example of the present disclosure.

The drawings show diagrammatic exemplifying embodiments of the present disclosure and are thus not necessarily drawn to scale. It shall be noted that some details in the drawings may be exaggerated in order to better describe and illustrate the disclosure. Like reference characters refer to like elements throughout the description, unless expressed otherwise.

### DETAILED DESCRIPTION

Aspects set forth below represent the necessary information to enable those skilled in the art to practice the disclosure.

The present disclosure is based on an insight that it may be advantageous to efficiently protect battery cell modules of a battery pack from damage during assembly, disassembly, and/or use. The present disclosure is also based on an insight that it may be advantageous to improve the protection of the battery cells in the battery cell modules, such as by improved fire protection and by reducing heat transfer between battery cell modules. Accordingly, by examples of the present disclosure, an improved battery cell module arrangement is provided, which at least partly alleviates one or more drawbacks of the prior art, or which at least provides a suitable alternative.

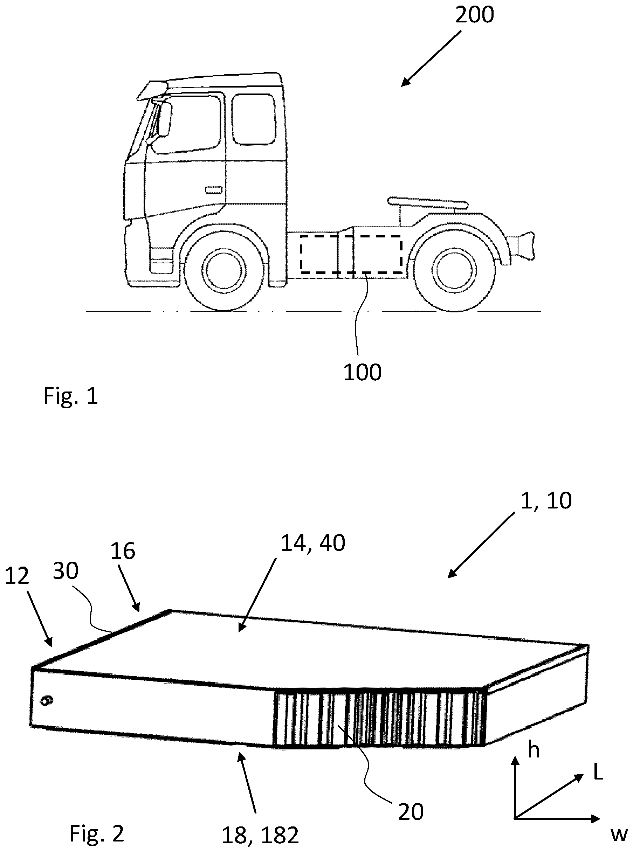

Fig. 1 depicts a side view of a vehicle 200 according to an example of the present disclosure. The vehicle 200 is in this example a truck, and more particularly a towing truck or tractor, for towing one or more trailers (not shown). It shall however be understood that the vehicle is not limited only to this type of vehicle, but any other type of vehicle may also be used, such as a bus, a construction equipment, a passenger car or a marine vessel. Construction equipment may be a work machine, such as a wheel loader, a dump truck, an excavator, etc. The vehicle 200 comprises an electric battery pack 100 according to examples of the disclosure. The electric battery pack 100 is typically a high voltage electric battery pack 100, used for driving one or more electric traction motors (not shown) of the vehicle 200. A high a voltage electric battery pack 100 may have a voltage level of at least 60 volts (v), such as at least 200 v, 300 v, 400 v, 500 v or 600 v, for example 400 v or 800 v. The one or more electric traction motors may also function as generators for charging the electric battery pack 100 during use.

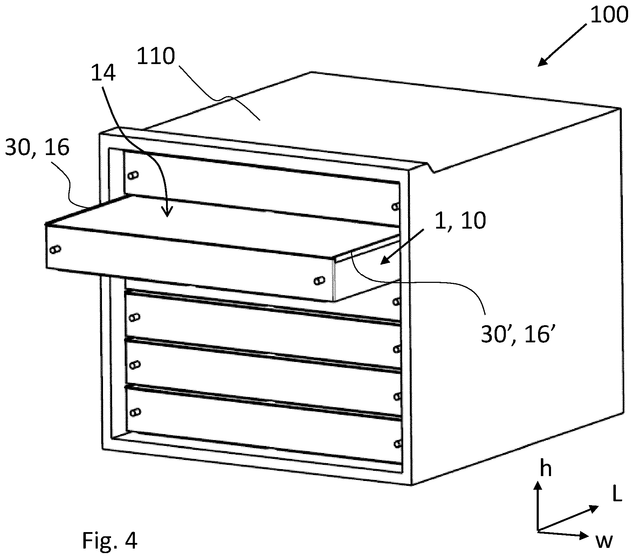

With reference to fig. 2, a battery cell module arrangement 1 according to an example of the first aspect of the disclosure is depicted in a perspective view. Accordingly, fig. 2 depicts a battery cell module arrangement 1 for an electric battery pack 100 comprising a housing 110 (see e.g. fig. 4) for storing a plurality of battery cell modules 10.

The battery cell module arrangement 1 comprises a first battery cell module 10 which extends in a longitudinal direction L, a width direction w and a height direction h. The directions L, w and h are herein orthogonal to each other, such as forming part of a Cartesian coordinate system. The first battery cell module 10 is in this example formed as a box with six different sides, forming outer side sections. The first battery cell module 10 may be formed differently, as long as it forms a volume for holding at least one battery cell 20.

Accordingly, the first battery cell module 10 is configured to hold and enclose at least one battery cell 20. In this example, a plurality of battery cells 20 are held and enclosed by the first battery cell module 10.

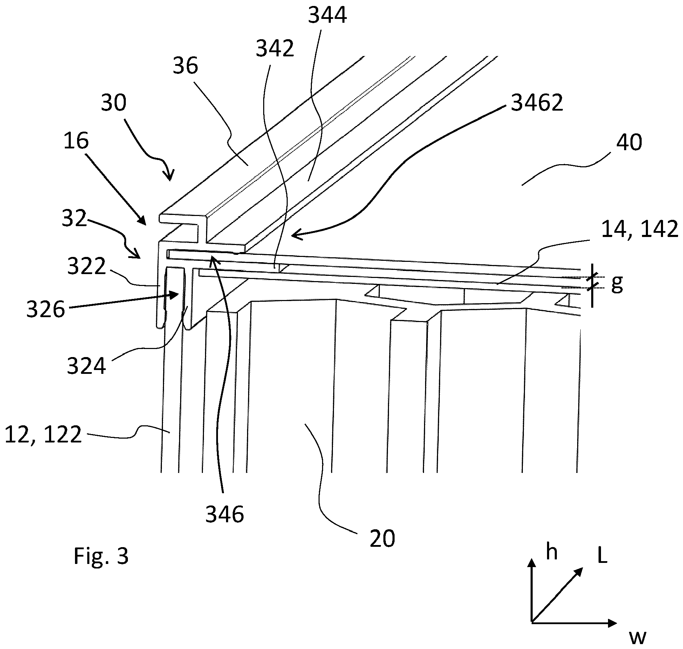

The first battery cell module 10 comprises a first outer side section 12 and a second outer side section 14 which are angled relative each other and divided by a first outer edge 16, wherein the first outer edge 16 substantially extends in one of the longitudinal direction L, the width direction w and the height direction h. In the shown example, the first outer edge 16 extends in the longitudinal direction L. The first outer side section 12 is in this example the outer side facing away in a leftward direction from the first battery cell module 10. The second outer side section 14 is in this example an upper outer side section of the first battery cell module 10, as seen with respect to the height direction h which may correspond to a vertical direction. The first outer side section 12 comprises a first outer wall segment 122 (see e.g. fig. 3) which at least partly defines the first outer edge 16. The first outer side section 12 and the second outer side section 14 are here angled by 90 degrees with respect to each other.

The battery cell module arrangement 1 further comprises a protective element 30 for protecting the first battery cell module 10 from contact with another element, such as another battery cell module and/or the housing 110 of the electric battery pack 100. A more detailed example of the protective element 30 is shown in fig. 3. More specifically, fig. 3 is an enlarged view of the battery cell module arrangement 1 with focus on the portion close to the first outer edge 16. The protective element 30 is configured to enclose a portion of the first outer edge 16. The protective element 30 further comprises an attachment arrangement 32 for attaching the protective element 30 to the first battery cell module 10.

The attachment arrangement 32 comprises a first protruding member 322 and a second protruding member 324 which are offset from each other so that a first recess 326 is formed therebetween, and wherein the first and second protruding members 322, 324 are configured so that the first outer wall segment 122 can be received in the first recess 326, thereby attaching the protective element 30 to the first battery cell module 10. In this example, the first and second protruding member 322, 324 protrude downwardly in the height direction h. The first and second protruding members 322, 324 also extend in the length direction L along the extension of the first outer edge 16. The first outer wall segment 122 is in this example a wall segment which extends in the longitudinal direction L and the height direction h, and which further has a wall thickness in the width direction w.

At least one of the first and second protruding members 322, 324 may be elastically flexible so that a biasing force is generated between the respective first and second protruding member 322, 324 and the first outer wall segment 122 when the first outer wall segment 122 is received in the first recess 326. In the shown example, the biasing force is preferably a force extending in the width direction w. For example, a width of the first recess 326, as seen in the width direction w, may be smaller than the thickness of the first outer wall segment 122, thereby generating a biasing force when the first outer wall segment 122 is received in the first recess 326. Accordingly, in the shown example, the elastic flexibility may be provided by allowing the first and second protruding members 322, 324 to be elastically flexible in the width direction w.

As further shown, the protective element 30 may further comprise a third protruding member 342 and a fourth protruding member 344 which are offset from each other so that a second recess 346 is formed therebetween, wherein the third and fourth protruding members 342, 344 are configured to protrude away from the first outer edge 16 and outside the second outer side section 14 when the protective element 30 is attached to the first battery cell module 10. In this example, the third and fourth protruding members 342, 344 protrude in the width direction w away from the first outer edge 16 and outside the second outer side section 14. The third and fourth protruding members 342, 344 also extend in the length direction L along the extension of the first outer edge 16. An opening direction of an opening 3462 of the second recess 346 face away from the first outer edge 16 and towards a second outer edge (not shown) which is provided on an opposite side to the first outer edge 16 on the second outer side section 14. Accordingly, the opening direction corresponds to the width direction w in this example.

As further shown, the battery cell module arrangement 1 may further comprise a first protection layer element 40, such as a thermal and/or fire protection layer element 40, which is configured to be received in the second recess 346, i.e. via the opening 3462, thereby attaching the first protection layer element 40 to the protective element 30, wherein the first protection layer element 40 is configured to cover at least a portion of the second outer side section 14. For example, as shown, the first protection layer element 40 may form an outermost layer which is provided outside of the second outer side section 14. By way of example, the first protection layer element 40 may be a mica sheet for protecting the first battery cell module 1 and an adjacent battery cell module (not shown) from excessive heat and fire. The first protection layer element 40 may additionally or alternatively be configured to provide electrical insulation between the first battery cell module 1 and an adjacent battery cell module.

The battery cell module arrangement 1 may as shown be configured so that a gap g is formed between the second outer side section 14 and the first protection layer element 40 when the first protection layer element 40 is received in the second recess 346. For example, the gap g may be in the range of 1-50 mm, such as 1-15 mm, as measured in the height direction h. The gap g may further reduce the risk that flames from a battery cell 20 are transferred to an adjacent battery cell module.

As further shown, the third protruding member 342, which in this example is provided closer to the second outer side section 14 than the fourth protruding member 344, may protrude further outside the second outer side section 14 than the fourth protruding member 344. Accordingly, in this example, the third protruding member 342 protrudes further in the width direction w than the fourth protruding member 344. Thereby, improved support for the first protection layer element 40 may be obtained. This configuration may also facilitate the mounting procedure of the first protection layer element 40 into the second recess 346.

The protective element 30 as depicted in e.g. fig. 2 is configured to extend along the complete length of the first outer edge 16. However, in alternative examples, the protective element 30 may be configured to extend along at least 10 %, 20 %, 30 %, 40 %, 50 %, 60 %, 70 %, 80 % or more of the length of the first outer edge 16.

The protective element 30 may, as seen in a sectional plane which is perpendicular to a longitudinal extension of the first recess 326, which longitudinal extension corresponds to an extension of the first outer edge 16 when the protective element 30 is attached to the first battery cell module 10, comprise a first protective portion 36 which is configured to protrude away from the second outer side section 14 in a normal direction thereof when the protective element 30 is attached to the first battery cell module 10. In the example shown in fig. 3, the normal direction of the second outer side section 14 corresponds to the height direction h.

The first protective portion 36 may be elastically flexible in a direction which corresponds to the normal direction of the second outer side section 14, i.e. in this example the height direction h, as seen when the protective element 30 is attached to the first battery cell module 10. In the example shown in fig. 3, the first protective portion 36, as seen in the sectional plane which is perpendicular to the longitudinal extension of the first recess 326, is C-formed. However, other shapes are also possible, such as V-formed, and/or Z-formed.

As further shown in fig. 3, the second outer side section 14 may comprise a second protection layer element 142, such as a second thermal and/or fire protection layer element 142. The second protection layer element 142 may in an example be denoted a main protection layer element and the first protection layer element 40 as mentioned in the above may be denoted an auxiliary protection layer element. The second protection layer element 142 may for example be a mica sheet, or any other protection sheet, such as a sheet made of a polymer or metal. Additionally, or alternatively, the first protection layer element 40 may for example be a mica sheet, or any other protection sheet, such as a sheet made of a polymer or metal. Still optionally, the first protection layer element 40 may be made thicker than the second protection layer element 142. As such, if a battery cell 20 catches fire, the fire may protrude through the second protection layer element 142, whereafter the fire may be contained in the above-mentioned gap g, i.e. in a space therebetween. Thus, the risk of the fire spreading may be reduced. In an alternative example, the fire may be channeled out via the gap g and out from battery burster outlets (not shown).

As mentioned in the above, the third protruding member 342 may protrude further outside the second outer side section 14 than the fourth protruding member 344. Thereby, improved support for the second protection layer element 142 may be obtained.

With reference to fig. 2, the first battery cell module 10 may comprise a third outer side section 18 which is provided on an opposing side of the first battery cell module 10 with respect to the second outer side section 14, wherein the third outer side section 18 comprises a cooling plate element 182 for cooling the first battery cell module 10 during use.

The protective element 30 as e.g. shown in fig. 3 may be an extruded profile with an extrusion direction which corresponds to a longitudinal extension of the first recess 326, which longitudinal extension corresponds to an extension of the first outer edge 16 when the protective element 30 is attached to the first battery cell module 10. Accordingly, the protective element 30 may have a similar, or identical, cross-sectional profile along the longitudinal extension of the first recess 326.

Fig. 4 depicts an electric battery pack 100 according to an example of the disclosure. The electric battery pack 100 comprises a housing 110 for storing a plurality of battery cell modules 10. In the shown example, the battery cell modules 10 are stacked on top of each other in the height direction h. More specifically, six battery cell modules 10 are stacked on top of each other in this example. In addition, in the shown example the housing 110 is formed as a box. The height direction h, the longitudinal direction L and the width direction w in fig. 4 are the same as shown in figs. 2 and 3. The electric battery pack 100 comprises at least one battery cell module arrangement 1 according to any example of the first aspect of the disclosure. Hence, the first battery cell module 10 as shown in fig. 4 comprises a protective element 30. In the shown example, the battery cell module arrangement 1 comprises two protective elements 30, 30' on opposing outer edges 16, 16' of the second outer side section 14. The outer edge 16 is the first outer edge 16 as mentioned herein and the outer edge 16' may be the above-mentioned second outer edge 16'. The protective element 30' is similar to the protective element 30, with the difference that it is configured to cover the opposing outer edge 16' of the second outer side section 14. Any battery cell module of the electric battery pack 100 may comprise protective elements as disclosed herein at any one of its upper outer edges, lower outer edges, and/or outer edges extending in the height direction h.

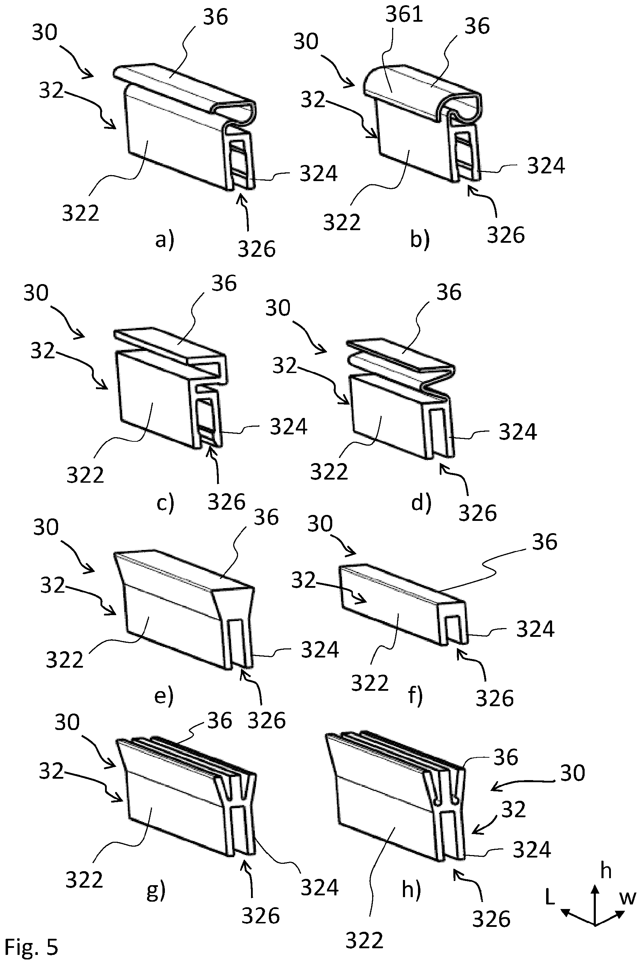

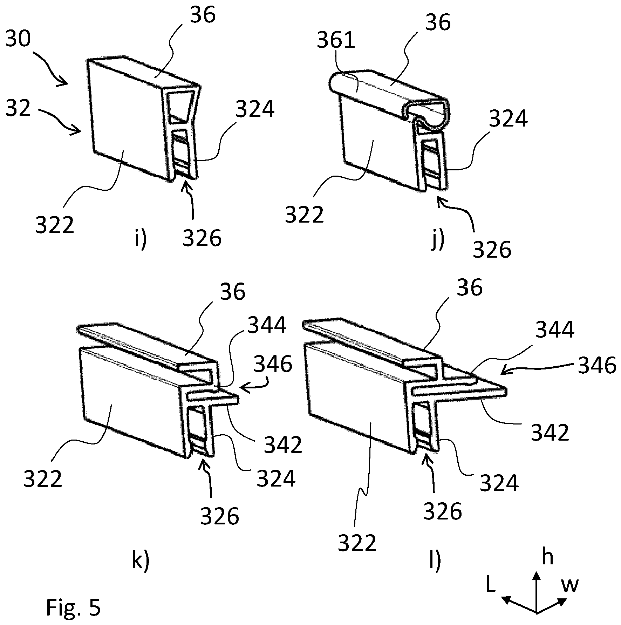

With reference to figs. 5a-l, protective elements 30 according to examples of the disclosure are shown in perspective view. Figs. 5a-l show that the protective element 30 according to the disclosure may be formed in many different shapes. The attachment arrangement 32 is in these examples similar, the main difference can instead be seen with respect to the first protective portion 36. The different shapes of the protective portions 36 will in the following be described as seen in a plane which is perpendicular to the length direction L, corresponding to the longitudinal extension of the first recess 326.

In fig. 5a, the protective portion 36 is C-formed so that an elastic flexibility is provided in the height direction h. In fig. 5b, the protective portion 36 is also C-formed, with the difference that it comprises an overhang portion 361 which at least partly covers an otherwise present opening of the C-formed protective portion 36. The protective portion 36 in fig. 5c is similar to the one shown in fig. 3. In fig. 5d, the protective portion 36 is z-formed, thereby enabling a larger elastic flexibility in the height direction h. In figs. 5e-f, the protective portion 36 is a solid element, as seen in the plane being perpendicular to the longitudinal direction L. These configurations may provide a reduced elastic flexibility in the height direction h, such as no, or almost no, elastic flexibility. The protective portions 36 in figs. 5g-h are similar in configuration, i.e. the respective protective portion 36 is V-shaped. This configuration may provide an elastic flexibility in the width direction w. It shall be understood that an elastic flexibility in the width direction w may also be obtained by use of other shapes of the protective portion 36. The protective portion 36 in fig. 5i is O-shaped, or square-shaped, with a hollow inside. This configuration may be advantageous if there is a strive to reduce the weight of the protective element 30. The protective portion 36 in fig. 5j is similar to the one shown in fig. 5b, with the difference that the overhang portion 361 is smaller. The protective elements 30 as shown in figs. 5k-l show examples of the third and fourth protruding members 344, 346 as disclosed herein. As shown, the third protruding members 344 may extend further than the fourth protruding member 346. The protruding members 344, 346 in fig. 51 extend further in the width direction w than the corresponding protruding members 344, 346 in fig 5k. The example in fig. 51 may provide a firmer and more reliable support for a protection layer element. For example, third and fourth protruding members 344, 346, may be configured so that an extension of the protective element 30 in the width direction w is longer than an extension of the protective element 30 in the height direction h, such as at least 1.2 times longer, for example at least 1.4 times longer. As further shown in e.g. figs. 5k-l, the protective element 30 may be L-shaped, as seen in its cross-sectional view, defined by the height direction h and the width direction w.

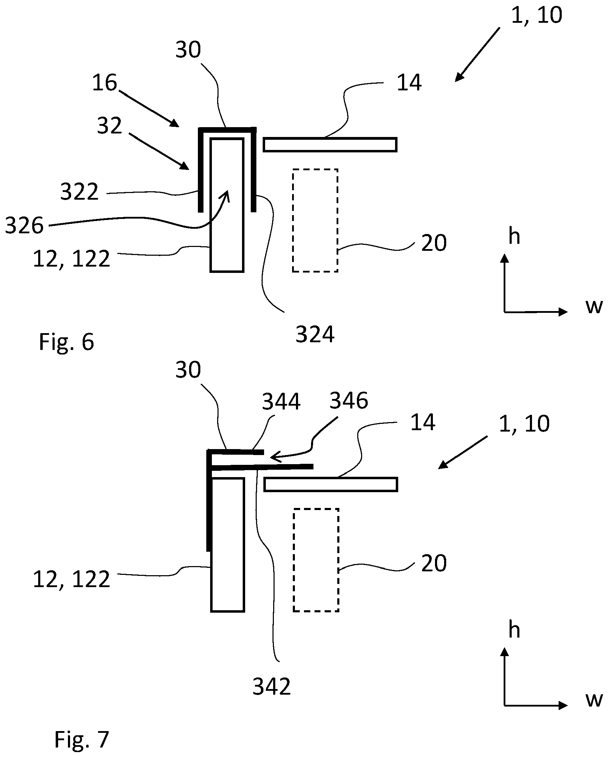

In figs. 6 and 7, schematic views of protective elements 30 according to examples of the disclosure are shown. The protective elements 30 are shown in cross-sectional views, defined by the height direction h and the width direction w of the protective elements 30, which directions correspond to the respective height direction h and width direction w of the first battery cell module 10 when being attached thereto. In fig. 6, an attachment arrangement 32 comprising first and second protruding members 322, 324 is depicted. In fig. 7, third and fourth protruding members 344, 346 are depicted. Fig. 7 implies that the protective element 30 does not necessarily need to have a first and a second protruding member 322, 324. Fig. 6, on the other hand, implies that the protective element 30 does not necessarily need to have a third and fourth protruding member 344, 346. However, the combination, as e.g. shown in fig. 3, has shown to provide a protective element 30 which can be reliably and robustly attached to the first battery cell module 10 and which improves the protection of the first battery cell module 10.

The protective element 30 as disclosed herein may be made of any suitable material, such as metal and/or polymer, for example aluminum.

In the below, features and possible feature combinations of examples of the disclosure are presented as a list of items.
1. A battery cell module arrangement (1) for an electric battery pack (100) comprising a housing (110) for storing a plurality of battery cell modules (10), the battery cell module arrangement (1) comprising:
   - a first battery cell module (10) which extends in a longitudinal direction (L), a width direction (w) and a height direction (h), wherein the first battery cell module (10):
      - is configured to hold and enclose at least one battery cell (20), and
      - comprises a first outer side section (12) and a second outer side section (14) which are angled relative each other and divided by a first outer edge (16), wherein the first outer edge (16) substantially extends in one of the longitudinal direction (L), the width direction (w) and the height direction (h), and wherein the first outer side section (12) comprises a first outer wall segment (122) which at least partly defines the first outer edge (16),
   the battery cell module arrangement (1) further comprising:
   - a protective element (30) for protecting the first battery cell module (10) from contact with another element, such as another battery cell module and/or the housing (110) of the electric battery pack (100), wherein the protective element (30):
      - is configured to enclose a portion of the first outer edge (16), and
      - comprises an attachment arrangement (32) for attaching the protective element (30) to the first battery cell module (10).
2. The battery cell module arrangement (1) according to item 1, wherein the attachment arrangement (32) comprises a first protruding member (322) and a second protruding member (324) which are offset from each other so that a first recess (326) is formed therebetween, and wherein the first and second protruding members (322, 324) are configured so that the first outer wall segment (122) can be received in the first recess (326), thereby attaching the protective element (30) to the first battery cell module (10).
3. The battery cell module arrangement (1) according to item 2, wherein at least one of the first and second protruding members (322, 324) is elastically flexible so that a biasing force is generated between the respective first and second protruding member (322, 324) and the first outer wall segment (122) when the first outer wall segment (122) is received in the first recess (326).
4. The battery cell module arrangement (1) according to any one of the preceding items, wherein the protective element (30) further comprises a third protruding member (342) and a fourth protruding member (344) which are offset from each other so that a second recess (346) is formed therebetween, wherein the third and fourth protruding members (342, 346) are configured to protrude away from the first outer edge (12) and outside the second outer side section (14) when the protective element (30) is attached to the first battery cell module (10).
5. The battery cell module arrangement (1) according to item 4, further comprising a first protection layer element (40), such as a first thermal and/or fire protection layer element (40), which is configured to be received in the second recess (346), thereby attaching the first protection layer element (40) to the protective element (30), wherein the first protection layer element (40) is configured to cover at least a portion of the second outer side section (14).
6. The battery cell module arrangement (1) according to item 5, wherein the battery cell module arrangement (1) is configured so that a gap (g) is formed between the second outer side section (14) and the first protection layer element (40) when the first protection layer element (40) is received in the second recess (346).
7. The battery cell module arrangement (1) according to any one of items 4-6, wherein the third protruding member (342) is configured to be provided closer to the second outer side section (14) than the fourth protruding member (344) when the protective element (30) is attached to the first battery cell module (10), and wherein the third protruding member (342) protrudes further outside the second outer side section (14) than the fourth protruding member (344).
8. The battery cell module arrangement (1) according to any one of the preceding items, wherein the protective element (30) is configured to extend along at least 10 % of a length of the first outer edge (16), such as at least 20 %, 30 %, 40 %, 50 %, 60 %, 70 %, 80 % or more of the length of the first outer edge (16).
9. The battery cell module arrangement (1) according to any one of the preceding items, wherein the protective element (30), as seen in a sectional plane which is perpendicular to a longitudinal extension of the first recess (326), which longitudinal extension corresponds to an extension of the first outer edge (16) when the protective element (30) is attached to the first battery cell module (10), comprises a first protective portion (36) which is configured to protrude away from the second outer side section (14) in a normal direction thereof when the protective element (30) is attached to the first battery cell module (10).
10. The battery cell module arrangement (1) according to item 9, wherein the first protective portion (36) is elastically flexible in a direction which corresponds to the normal direction of the second outer side section (14), as seen when the protective element (30) is attached to the first battery cell module (10).
11. The battery cell module arrangement (1) according to any one of items 9-10, wherein the first protective portion (36), as seen in the sectional plane which is perpendicular to the longitudinal extension of the first recess (326), is V-formed, C-formed and/or Z-formed.
12. The battery cell module arrangement (1) according to any one of the preceding items, wherein the second outer side section (14) comprises a second protection layer element (142), such as a second thermal and/or fire protection layer element (142).
13. The battery cell module arrangement (1) according to any one of the preceding items, wherein the first battery cell module (10) comprises a third outer side section (18) which is provided on an opposing side of the first battery cell module (10) with respect to the second outer side section (14), wherein the third outer side section (18) comprises a cooling plate element (182) for cooling the first battery cell module (10) during use.
14. The battery cell module arrangement (1) according to any one of the preceding items, wherein the protective element (30) is an extruded profile with an extrusion direction which corresponds to a longitudinal extension of the first recess (326), which longitudinal extension corresponds to an extension of the first outer edge (16) when the protective element (30) is attached to the first battery cell module (10).
15. An electric battery pack (100) comprising a housing (110) for storing a plurality of battery cell modules (10), wherein the electric battery pack (100) comprises at least one battery cell module arrangement (1) according to any one of the preceding items.
16. A vehicle (200) comprising an electric battery pack (100) according to item 15.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A battery cell module arrangement (1) for an electric battery pack (100) comprising a housing (110) for storing a plurality of battery cell modules (10), the battery cell module arrangement (1) comprising:
- a first battery cell module (10) which extends in a longitudinal direction (L), a width direction (w) and a height direction (h), wherein the first battery cell module (10):
- is configured to hold and enclose at least one battery cell (20), and
- comprises a first outer side section (12) and a second outer side section (14) which are angled relative each other and divided by a first outer edge (16), wherein the first outer edge (16) substantially extends in one of the longitudinal direction (L), the width direction (w) and the height direction (h), and wherein the first outer side section (12) comprises a first outer wall segment (122) which at least partly defines the first outer edge (16),
the battery cell module arrangement (1) further comprising:
- a protective element (30) for protecting the first battery cell module (10) from contact with another element, such as another battery cell module and/or the housing (110) of the electric battery pack (100), wherein the protective element (30):
- is configured to enclose a portion of the first outer edge (16), and
- comprises an attachment arrangement (32) for attaching the protective element (30) to the first battery cell module (10), the attachment arrangement (32) comprising a first protruding member (322) and a second protruding member (324) which are offset from each other so that a first recess (326) is formed therebetween, and wherein the first and second protruding members (322, 324) are configured so that the first outer wall segment (122) can be received in the first recess (326), thereby attaching the protective element (30) to the first battery cell module (10).

2. The battery cell module arrangement (1) according to claim 1, wherein at least one of the first and second protruding members (322, 324) is elastically flexible so that a biasing force is generated between the respective first and second protruding member (322, 324) and the first outer wall segment (122) when the first outer wall segment (122) is received in the first recess (326).

3. The battery cell module arrangement (1) according to any one of the preceding claims, wherein the protective element (30) further comprises a third protruding member (342) and a fourth protruding member (344) which are offset from each other so that a second recess (346) is formed therebetween, wherein the third and fourth protruding members (342, 346) are configured to protrude away from the first outer edge (16) and outside the second outer side section (14) when the protective element (30) is attached to the first battery cell module (10).

4. The battery cell module arrangement (1) according to claim 3, further comprising a first protection layer element (40), such as a thermal and/or fire protection layer element (40), which is configured to be received in the second recess (346), thereby attaching the first protection layer element (40) to the protective element (30), wherein the first protection layer element (40) is configured to cover at least a portion of the second outer side section (14).

5. The battery cell module arrangement (1) according to claim 4, wherein the battery cell module arrangement (1) is configured so that a gap (g) is formed between the second outer side section (14) and the first protection layer element (40) when the first protection layer element (40) is received in the second recess (346).

6. The battery cell module arrangement (1) according to any one of claims 3-5, wherein the third protruding member (342) is configured to be provided closer to the second outer side section (14) than the fourth protruding member (344) when the protective element (30) is attached to the first battery cell module (10), and wherein the third protruding member (342) protrudes further outside the second outer side section (14) than the fourth protruding member (344).

7. The battery cell module arrangement (1) according to any one of the preceding claims, wherein the protective element (30) is configured to extend along at least 10 % of a length of the first outer edge (16), such as at least 20 %, 30 %, 40 %, 50 %, 60 %, 70 %, 80 % or more of the length of the first outer edge (16).

8. The battery cell module arrangement (1) according to any one of the preceding claims, wherein the protective element (30), as seen in a sectional plane which is perpendicular to a longitudinal extension of the first recess (326), which longitudinal extension corresponds to an extension of the first outer edge (16) when the protective element (30) is attached to the first battery cell module (10), comprises a first protective portion (36) which is configured to protrude away from the second outer side section (14) in a normal direction thereof when the protective element (30) is attached to the first battery cell module (10).

9. The battery cell module arrangement (1) according to claim 8, wherein the first protective portion (36) is elastically flexible in a direction which corresponds to the normal direction of the second outer side section (14), as seen when the protective element (30) is attached to the first battery cell module (10).

10. The battery cell module arrangement (1) according to any one of claims 8-9, wherein the first protective portion (36), as seen in the sectional plane which is perpendicular to the longitudinal extension of the first recess (326), is V-formed, C-formed and/or Z-formed.

11. The battery cell module arrangement (1) according to any one of the preceding claims, wherein the second outer side section (14) comprises a second protection layer element, such as a second thermal and/or fire protection layer element (142).

12. The battery cell module arrangement (1) according to any one of the preceding claims, wherein the first battery cell module (10) comprises a third outer side section (18) which is provided on an opposing side of the first battery cell module (10) with respect to the second outer side section (14), wherein the third outer side section (18) comprises a cooling plate element (182) for cooling the first battery cell module (10) during use.

13. The battery cell module arrangement (1) according to any one of the preceding claims, wherein the protective element (30) is an extruded profile with an extrusion direction which corresponds to a longitudinal extension of the first recess (326), which longitudinal extension corresponds to an extension of the first outer edge (16) when the protective element (30) is attached to the first battery cell module (10).

14. An electric battery pack (100) comprising a housing (110) for storing a plurality of battery cell modules (10), wherein the electric battery pack (100) comprises at least one battery cell module arrangement (1) according to any one of the preceding claims.

15. A vehicle (200) comprising an electric battery pack (100) according to claim 14.
